# EUROPEAN PATENT SPECIFICATION

(11) **EP 3 826 475 B1**
(45) Date of publication and mention of the grant of the patent: **27.04.2022**
(21) Application number: 19762216.0
(22) Date of filing: 23.07.2019
(51) Int. Cl.: A23L 7/109, A21D 10/02

(54) **METHOD OF MAKING A FOOD KIT FOR THE PREPARATION OF FRESH FILLED PASTA, FOOD KIT OBTAINED THEREBY AND METHOD OF USE**
VERFAHREN ZUR HERSTELLUNG EINES NAHRUNGSMITTELKITS ZUR HERSTELLUNG VON FRISCHEN GEFÜLLTEN TEIGWAREN, SO HERGESTELLTES NAHRUNGSMITTELKIT UND VERWENDUNGSVERFAHREN
PROCÉDÉ DE FABRICATION DE KIT ALIMENTAIRE POUR LA PRÉPARATION DE PÂTES FARCIES FRAÎCHES, KIT ALIMENTAIRE OBTENU PAR CELUI-CI ET PROCÉDÉ D'UTILISATION

(30) Priority: 23.07.2018 IT 201800007432
(43) Date of publication of application: 02.06.2021
(73) Proprietor: BERTAGNI 1882 S.p.A., 38063 Avio (TN) (IT)
(72) Inventor: BOLLA, Enrico, 37218 Verona (VR) (IT)
(74) Representative: Maroscia, Antonio
(86) International application number: PCT/IB2019/056260
(87) International publication number: WO 2020/021438

(56) References cited:
- US-A1- 2002 064 582
- US-A1- 2002 064 582
- US-A1- 2004 081 738
- US-A1- 2004 081 738
- US-A1- 2004 126 480
- US-A1- 2004 126 480

## Description

### Field of The Invention

The present invention generally finds application in the field of food products and particularly relates to a method of making a food kit intended for on-demand preparation of fresh filled pasta, such as tortelli, ravioli, panzerotti and the like.

The invention further relates to a food kit obtained with the above method and its method of use by a final user.

### Background art

Filled pasta, comprising an envelope of pasta enclosing at least one filling therein has been long known among food products.

These food products are typical products of Italian gastronomy and the filling may be made of several types of ingredients such as, for instance, meat, fish, cereals, vegetables, cheese or the like.

Depending on the Italian or foreign regional tradition, these types of filled pasta are known as ravioli and tortellini, cappelletti or panzerotti.

Generally, the filling is placed in a sheet of pasta that is later closed on itself or between a pair of sheets that are intended to cover and enclose the filling.

This kind of food products may be found in the retail channel, i.e. in refrigerated cabinets of supermarkets and grocery stores, in bulk or prepackaged form and ready for cooking, so that users may save the time required for preparation of filled pasta for immediate consumption at a relatively low price, or in the HoReCa channel, i.e. collective food service, such as restaurants, canteens, catering.

Fresh pasta is available in a variety of types, depending on the production method, i.e. daily fresh, with no thermal treatment and up to 48 hour-shelf life, 10 days fresh, also handmade and with steam pasteurization, industrial fresh produced with automatic forming machines and with pasteurization and controlled-atmosphere packaging with over 60 day-shelf life at a temperature of 0-4°C and frozen fresh pasta, made in large industrial facilities with pasteurization and freezing and very long storage time, up to 12-15 months at a temperature of -18°C.

Nevertheless, this type of pre-packaged filled food products suffers from the drawback that their organoleptic qualities and taste are quite different from those of hand-made fresh ones.

This is due to pasteurization of the sheets of pasta by heating in an aqueous or non-aqueous environment, or non-aqueous, which causes a change in the structure of the sheet caused by pre-gelatinization of starches.

This type of treatment is usually carried out in a steam-saturated chamber at a temperature that ranges from 80°C to 100°C, or in water heated to 95-100°C, and the combined effect of time and temperature inevitably cause gelatinization of starches. This process, amongst other things, is also required for perfect sealing of the tortelli and prevent any spread of the filling from the tortelli during cooking; the correct moisture content of pasta (about 30% R.H.) is required for gelatinization of starches with the combined effect of pasta exposure to a given temperature (80-100°C) for a given time (2-10 minutes).

As a result of temperature and proper moisture, the mutually contacting pasta sheets (or one sheet folded on itself) release starch and cause the proper sheet adhesion.

Furthermore, during the period between forming of the filled food product and cooking by the user, the mutually contacting sheets of pasta and filling tend to exchange their respective organoleptic components in a natural diffusion process, which results in a quality loss in the final product.

This process of diffusion/exchange is inevitable, due to the nature of the components of the filled food product, which comprise water and fats that facilitate this process. Pasta has about 30% moisture content, 94% to 97% ambient relative humidity and 9-10% fats, and these values are compatible with diffusion processes (water) and prevents the creation of a barrier to avoid them (too low fat content).

In addition, the filling has 40% to 70% moisture content, 94% to 97% ambient relative humidity and and a fat content that cannot act as a barrier, which facilitates fast diffusion processes. This is because a higher water content in the filling results in faster diffusion.

Furthermore, the presence of salt (used in significant amounts in the filling) and other components (such as sugars), with the proper humidity, will further accelerate diffusion and exchange processes until the two components, i.e. pasta and filling, reach a balance. Water and salt cause substantial chemical modification of the two components until both reach a very similar Aw (water activity) value, which may be close to the relative humidity value.

The physico-chemical changes in the two components will cause a quality degradation; the higher the moisture content of the filling (i.e. the greater the amount of fresh raw material) the higher the changes and hence organoleptic degradation.

In an attempt to at least partially obviate these drawbacks kits for preparing filled or seasoned food products have been developed in which the food components are in a dry or dehydrated state.

US2002064582 discloses a food product comprising a sealed container for a first dry food component of predetermined shape and a second dry powder food component which is designed to be reconstituted with the application of a liquid to form the filling for the first food component.

One drawback of this prior art arrangement is that the first food component cannot be modeled to assume shapes desired by the user. Furthermore, the predetermined shape of the first food component prevents the user from sealing it with the filling therein.

A further drawback of this arrangement is that the second food component, even after humidification does not exhibit the same organoleptic properties and the same quality as a handmade filling.

One more drawback of this arrangement is that the first and second food components are both treated by the common pasteurization techniques as described above and the starches of first component are pre-gelatinized.

### Technical Problem

In view of the prior art, the technical problem addressed by the present invention is to avoid pre-gelatinization of the sheets of pasta and the exchange of ingredients between the food components to thereby afford preparation of fresh filled pasta immediately before cooking, in much the same manner as the homemade one.

### Disclosure of the invention

The object of the present invention is to obviate the above drawbacks, by providing a method of making a food kit for on-demand preparation of fresh filled pasta, that is highly efficient and relatively cost-effective.

A particular object of the present invention is to provide a method and a kit of as described hereinbefore that might allow a user to manually prepare fresh filled pasta with much the same organoleptic qualities and taste as homemade fresh filled pasta.

A further particular object of the present invention is to provide a method and a kit as described hereinbefore that can prevent pre-gelatinization and fermentation of the sheets of pasta while avoiding the exchange of water, salts and other ingredients between the food components.

Another object of the present invention is to provide a method and a kit of as described hereinbefore that can facilitate coupling of each individual praline of filling in a corresponding sheet of pasta while avoiding the use of mechanical coupling means and/or starches and/or water.

A further object of the present invention is to provide a method of use of the food kit as described above that can allow a user to instantly manually prepare the fresh filled pasta, in a manner similar to the original, homemade processes.

Yet another object of the present invention is to provide a method of making, a kit and a method of use as described above that allow the user to prepare fresh filled pasta in a wide variety of shapes and types of products.

These and other objects, as more clearly explained hereinafter, are fulfilled by a method of making a food kit intended for on-demand preparation of fresh filled pasta, such as tortelli, ravioli, panzerotti and the like whose properties are similar to those of homemade fresh pasta, the method comprising making first components consisting of unit portions of single or double sheets of fresh pasta having a predetermined flat shape, cooling, vacuum packaging, high-pressure pasteurization and refrigeration of the pasteurized unit portions, to maintain their structure and physical-rheological characteristics unaltered, and avoid pre-gelatinization of starches, and making second components consisting of pre-dosed and conveniently shaped pralines of filling, which later undergo pasteurization and possibly freezing.

The first components and the second components are packaged and collected in a container for fresh or frozen storage, and are ready to be joined as they are or after thawing, for on-demand preparation of fresh filled pasta before cooking, thereby avoiding exchange of water, salts and other ingredients between the components.

One of the advantages of this process is that it avoids the need to modify the structure of the pasta due to the absence of high temperature water. Furthermore, the reduction of the microbial count is obtained without changing the chemico-physical structure of the pasta. The vacuum packaging minimizes any changes due to diffusion processes inside the pasta as well as degenerative processes caused by oxidation.

This process somewhat "hibernates" the pasta, which will maintain its initial characteristics until the package is opened. Then, the pasta may be used as if it were just been made.

With this process the sheet of pasta may be used exactly as if it were just been prepared and cut: once the filling is placed in its proper position of the unit portion of the sheet, the latter may be folded on itself with the filling therein, moistened to facilitate the sealing process, slightly pressed without using mechanical means, and then cooked. The sealing process will be completed during cooking.

The final product will exhibit a "silky" surface, an appropriate firmness and an excellent egg flavor, which are typical properties of fresh homemade pasta.

With the use of cold High Pressure Pasteurization (HPP), the unit portions of pasta will remain perfectly flat and smooth, which will facilitate perfect vacuum packaging, with a high-quality "aesthetic" effect, and a packaging having a good visual impact.

While high-pressure pasteurization has very high energy costs, it only affects 35-45% of the final product and in any case increases its added value and provides all the advantages of homemade pasta.

On the other hand, the filling will undergo a traditional pasteurization process, and possibly freezing, which will prevent initiation of fermentation and the increase of the bacterial count.

In a further aspect, the invention relates to a food kit for on-demand preparation of fresh filled pasta, obtained with the aforementioned method, as defined in claim 11.

In yet another aspect, the invention relates to a method of use of the food kit for on-demand preparation of fresh filled pasta as defined in claim 13.

Advantageous embodiments of the invention are defined in accordance with the dependent claims.

### Brief description of the drawings

Further features and advantages of the invention will be more apparent upon reading the detailed description of a preferred, non-exclusive embodiment of a method of making a food kit intended for on-demand preparation of fresh filled pasta, a food kit as defined above and a method of use of the food kit, which are described as a non-limiting example with the help of the annexed drawings, in which:
FIG. 1 is a block diagram of the method of making a food kit of the invention;
FIG. 2 schematically shows the food kit obtained with the method of Fig. 1;
FIGS. 3 and 4 schematically show the method of use of the food kit of Fig. 2, and an example of fresh filled pasta that can be obtained with the food kit.

### Detailed description of a preferred exemplary embodiment

The accompanying figures show a method of making a food kit, generally designated by numeral 1, for on-demand preparation of fresh filled pasta P, mainly intended for preparation of dishes of high gastronomic quality.

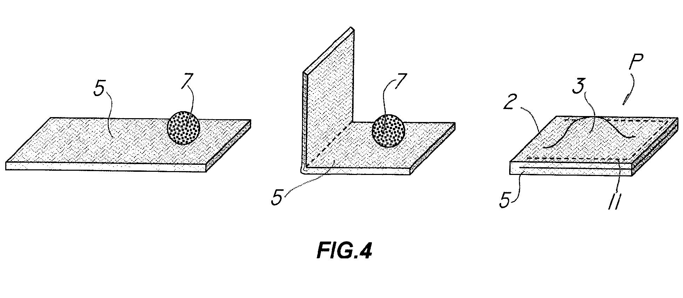

Fresh filled pasta P is known to be a composite food product essentially composed of a pasta enclosure, with a filling 3 therein, composed of edible raw materials, as schematically shown in FIG. 4.

In particular, the fresh filled pasta P made with the method of the invention may be in the form of tortelli, ravioli, cappelletti, panzerotti or the like, and may be configured to be cooked immediately after preparation.

As is known, cooking may be namely carried out by a user either by boiling, e.g. in water or broth or by baking, microwaving or frying.

The method of the invention essentially comprises the production of first components 4 consisting of unit portions of single or double sheets of fresh pasta 5 having a predetermined flat shape and the production of second components 6 consisting of pre-dosed pralines of filling 7, which are conveniently shaped, pasteurized and possibly frozen.

The pre-formed unit portions of fresh pasta 5 may be obtained by pre-cutting a unit sheet into multiple portions, the unit portions 5 being obtained by final separation along pre-cut lines, not shown.

Preferably, the pre-formed unit portions 5 or multiple pre-cut portions are traditionally obtained with a first step of a) making a dough from common wheat and/or durum wheat flour, semolina, water and/or eggs.

The next step is a step of b) unidirectional and/or multidirectional lamination of the dough to obtain a continuous sheet of predetermined thickness s, preferably ranging from 0.3 mm to 1.5 mm, with known techniques as typically used for bakery products such as bread, croissants and the like.

The continuous sheet undergoes a step of c) cutting or pre-cutting into substantially flat unit portions 5 or multiple 5 whose shape and size correspond to those of a single piece of tortelli, ravioli, panzerotti or the like.

For this purpose, the unit portions 5 may have predetermined sizes and shapes according to the particular type of fresh filled pasta P to be prepared by the user and may be selected from the group including squares, triangles, diamonds and circles or any other geometric shape adapted to form fresh filled pasta P.

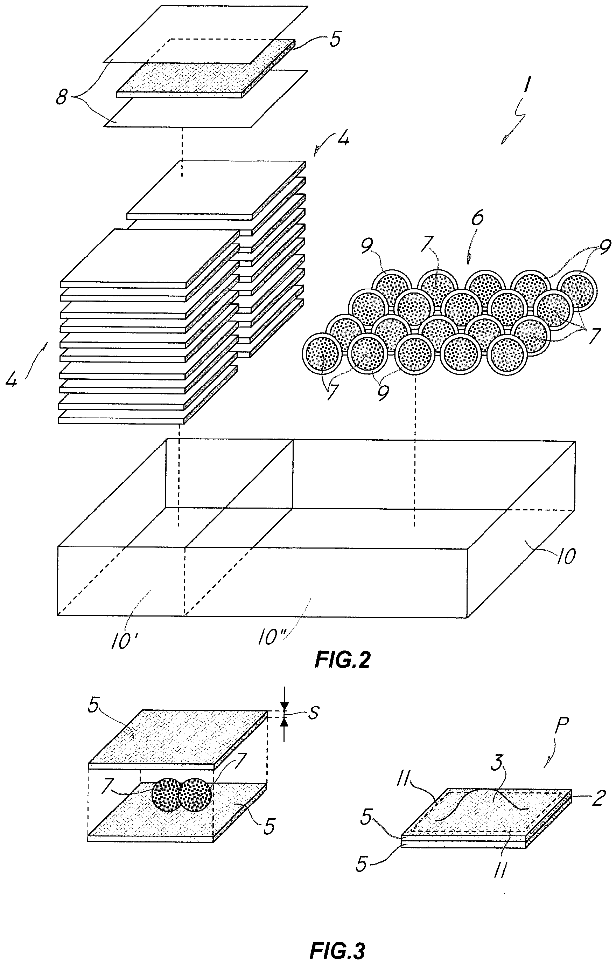

For convenience, the unit portions of FIGS. 2 and 3 are shown with a simple rectangular plan shape.

The cutting step c) is followed by a step of d) rapidly cooling the unit portions of fresh pasta 5 to a first temperature T₁ adapted to prevent any fermentation of the pasta.

Pasta fermentation is known to be caused by the natural action of yeasts and, in particular, lactic bacteria in the pasta and such fermentation changes the characteristics of the dough and hinders the user in forming of fresh filled pasta P.

It was experimentally found that rapid fermentation of pasta may be prevented if the first temperature T₁ of the cooling step d) is less than 8-10°C.

Suitably, the cut or pre-cut and cooled unit portions of the sheet of fresh pasta 5 are e) packaged under vacuum and in a controlled atmosphere by wrapping them in layers of biocompatible material 8. This packaging step e) may be carried out at a second temperature T₂ which is less than or equal to the first temperature T₁.

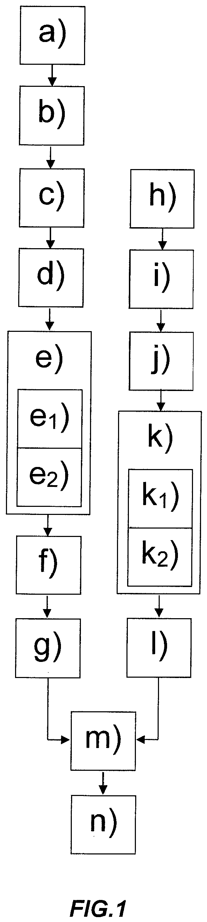

Conveniently, as shown in FIGS. 1 and 2, the vacuum packaging step e) may include a step of e₁) providing a number of layers of biocompatible material 8 and a step of e₂) placing a preformed unit portion 5 or multiple pre-cut portions, in each of the layers of biocompatible material 8.

These layers 8 may be preferably made of a food-grade biocompatible material and may be later sealed to maintain an appropriate degree of vacuum.

The vacuum-packaged unit or multiple portions 5 later undergo a step of f) cold High Pressure Pasteurization (HPP) at a third temperature T₃ which is adapted to avoid pre-gelatinization of the starch contained therein, such that the flat shape of the unit portions 5 will not be altered and the rheological and organoleptic characteristics of the base dough will be unaffected.

Conveniently, the second temperature T₂ of the vacuum packaging step e) may range from -5°C to 10°C and the third temperature T₃ of the pasteurization step f) may be less than 25°C.

High-pressure pasteurization (HPP) is carried out at a pressure P_{H} ranging from 5000 bar to 6000 bar, for a time t ranging from 2min to 6min.

After the pasteurization step f), the unit portions 5 undergo a step of g) cooling and final storage at a fourth temperature T₄ to obtain first components 4 of the food kit 1 in a fresh or frozen state, such that their structure and physical-rheological characteristics are kept unaltered, by avoiding pre-gelatinization of starches.

Furthermore, the cooling and storage step g) may be carried out by freezing or storing the first components 4 at a fourth temperature T₄ ranging from 0°C to 4°C.

According to the invention, the pralines of filling 7, are obtained by the steps of h) preparing a filling from appropriate ingredients according to a predetermined recipe, i) dosing the filling into individual pralines 7 whose weight and shape correspond to those of each piece of ravioli, tortelli, panzerotti or the like, j) pasteurizing the individual pralines 7 at ambient pressure, k) packaging the individual pralines 7 under protective atmosphere 7 in separate packages 9, I) cooling and refrigerating the individual pralines 7 to a fifth temperature T₅ to provide the second components 6 of the food kit 1 in a fresh or frozen state.

The ingredients used in the step of h) preparing the filling may be selected from the group comprising, for example, meat, fish, eggs, cheese, cold cuts, vegetables, cereals, protein- and fat-based substances, and other types of seasonings, flavors and sauces, even though these cannot be easily combined according to traditional recipes.

In a preferred embodiment of the invention, the steps h) of preparing and the steps i) of dosing the filling may comprise the method as disclosed in EP2900083, granted to the Applicant hereof.

In particular, the filling can be dosed by coextrusion using a dual-tube nozzle or, alternatively, single nozzles arranged in overlapping and concentric positions to obtain a pre-dosed praline 7 having two different fillings.

Conveniently, as shown in FIGS. 1 and 2, the packaging step k) may include a step of k₁) providing a number of separate packages 9 and a step of k₂) introducing an individual praline 7 with single or multiple fillings into each of the packages 9.

The packages 9 may be also formed with a food-grade biocompatible material and may a shape adapted to contain the praline 7.

According to the invention, the food kit 1 is formed by a step of m) introducing the first components 4 and the second components 6 into one container 10 and a step n) of storing components 4, 6 in a fresh or frozen state, ready to be joined as they are or after thawing, for on-demand preparation various formats of fresh filled pasta P before cooking, while avoiding exchange of water, salts and other ingredients between the first 4 and second components 6.

In a further aspect, the invention relates to a food kit 1 for on-demand preparation of fresh filled pasta P, obtained with the above discussed method.

As shown in FIG. 2, the food kit 1 comprises a container 10 containing a certain number of first components 4 consisting of substantially flat pre-formed unit portions 5 of fresh pasta and a corresponding number of second components 6 consisting of pre-dosed pralines of filling 7.

The substantially flat pre-formed unit portions of fresh pasta 5 and the pre-dosed pralines of filling 7 may be collected in a container 10 having corresponding separate compartments 10', 10".

In a preferred embodiment of the kit, the container may comprise the same number of unit portions and pralines to form fresh filled pasta of tortellini type with the filling contained in a sheet folded on itself, as shown in FIGS. 2 and 3.

In an alternative embodiment of the kit, not shown, the number of unit portions 5 in the container 10 may be greater than the number of pralines 7, or vice versa, to form panzerotti from a double sheet and a single filling, or ravioli from a single sheet and a double filling.

In a further aspect, the invention relates to a method of use of the food kit 1 for on-demand preparation of fresh filled pasta P, obtained with the above discussed method.

The method of use includes taking first components 4 consisting of flat unit portions of pasta 5 of a predetermined shape, and second components 6 consisting of pre-dosed pralines of filling 7 from the container 10 of the kit 1, composing by the user the first 4 and second components 6 to form fresh filled pasta P of a desired shape, while avoiding exchange of water, salts and other ingredients between the components 4, 6 under much the same conditions as preparation of homemade pasta.

In operation, after opening the layers of biocompatible material 8 containing the unit portions of pasta 5 and the packages 9 containing the pralines of filling 7, the user may place a praline 7 in a unit portion of pasta 5 and fold the latter on itself to form the filled pasta P, as schematically shown in FIG. 4.

Alternatively, the filled pasta P may be prepared by a user with a greater number of pralines 7 interposed between a pair of unit portions 5 of fresh pasta by sealing the edges 11 of the latter to form the filled pasta P, as shown in FIG. 3.

Furthermore, the high malleability of portions formed unit 5 and the total absence of pre-gelatinization of starches therein allow the user to form the filled pasta P by simply closing the edges 11 with a slight pressure and avoiding the use of additives such as starches or water.

The closed edges 11 and the cooking water will cause gelatinization of the fresh filled pasta P and ensure it will be prepared without spreads of filling.

It was experimentally found that the food kit 1 and the method of use as described above provide fresh filled pasta P that exhibits a superior silky surface, an appropriate firmness and an excellent egg flavor, like homemade pasta.

It will be apparent from the foregoing that the method of making a food kit, the food kit and the method of use of the kit of the invention achieve the intended objects and particularly avoid pre-gelatinization of the sheets of pasta before cooking.

They also prevent exchange of ingredients between the food components to thereby afford immediate preparation of fresh filled pasta before cooking, in much the same as the homemade one.

While the kit and method of the invention have been described with particular reference to the accompanying figures, the numerals referred to in the disclosure and claims are only used for the sake of a better intelligibility of the invention and shall not be intended to limit the claimed scope in any manner.

### Industrial Applicability

The present invention may find application in industry, because it can be produced on an industrial scale in the field of food processing.

## Claims

1. A method of making a food kit (1) intended for on-demand preparation of fresh filled pasta (P), such as tortelli, ravioli, panzerotti and the like with very the same properties as homemade fresh pasta, the method comprising making first components (4) consisting of unit portions (5) of single or double sheets of fresh pasta having a predetermined flat shape, cooling, vacuum packaging, cold high-pressure pasteurization and refrigeration of said pasteurized unit portions (5), to maintain their structure and physical-rheological characteristics unaltered, while avoiding pre-gelatinization of starches, and making second components (6) consisting of pre-dosed pralines of filling (7), which are conveniently shaped and later undergo pasteurization and/or possibly freezing, said first components (4) and said second components (6) being packaged and collected in a container (10) for fresh or frozen storage, and being ready to be joined together as they are or after unfreezing, for on-demand preparation of formats of fresh filled pasta (P) before cooking, thereby avoiding exchange of water, salts and other ingredients between said components (4, 6).

2. Method as claimed in claim 1, **characterized in that** said pre-formed unit portions of fresh pasta (5) are made by pre-cutting a unit sheet into multiple portions, said unit portions (5) being obtained by final separation along pre-cut lines.

3. Method as claimed in claim 1, **characterized in that** said pre-formed unit portions (5) or multiple pre-cut portions are obtained with the steps of:
a) making a dough from flour, semolina, water and eggs;
b) unidirectionally and/or multidirectionally laminating the dough to obtain a continuous sheet of predetermined thickness (s);
c) cutting or pre-cutting the continuous sheet into substantially flat unit portions (5) or multiple portions whose shape and size correspond to those of a single piece of tortelli, ravioli, panzerotti or the like.

5. Method as claimed in claim 1, **characterized in that** said unit portions (5) or multiple portions of fresh pasta undergo the following treatments:
d) rapid cooling at a first temperature (T₁) which is adapted to avoid any fermentation;
e) vacuum and controlled-atmosphere packaging of the individual unit portions (5) or multiple portions at a second temperature (T₂) less than or equal to said first temperature (T₁);
f) applying cold High Pressure Pasteurization to the vacuum-packaged unit portions (5) or multiple portions at a third temperature (T₃)which is adapted to avoid pre-gelatinization of the starch contained therein, such that the flat shape of said unit portions (5) will not be altered and the rheological and organoleptic properties of the base dough will be unaffected;
g) cooling and storing the pasteurized unit portions (5) at a fourth temperature (T₄) to obtain first components (4) of the food kit (1) in a fresh or frozen state.

6. Method as claimed in claim 1 wherein said pralines (7) are obtained with the steps of:
h) preparing a filling from appropriate ingredients according to a predetermined recipe;
i) dosing the filling into individual pralines (7) whose weight and shape correspond to those of each piece of ravioli, tortelli, panzerotti or the like;
j) pasteurizing the individual pralines (7) at ambient pressure;
k) packaging the individual pralines under protective atmosphere in separate packages (9);
I) cooling and refrigerating the individual pralines (7) at a fifth temperature (T₅) to obtain second components (4) of the food kit (1) in a fresh or frozen state.

7. Method as claimed in claim 5, **characterized in that** said step of f) applying cold High Pressure Pasteurization (HPP) to said unit portions of pasta (5) is carried out at a pressure (P_{H}) ranging from 5000 bar to 6000 bar, for a time (t) ranging from 2min to 6min.

8. Method as claimed in claim 3 **characterized in that** said third temperature (T₃) is less than 25°C.

9. Method as claimed in claim 3, **characterized in that** the predetermined thickness (s) of the sheet ranges from 0.3 mm to 1.5 mm.

10. Method as claimed in claim 3, **characterized in that** said first temperature (T₁) is less than 8-10°C, said second temperature (T₂) ranging from -5°C to 10°C.

11. A food kit (1) for on-demand preparation of fresh filled pasta (P) such as tortelli, ravioli, panzerotti and the like, comprising a given number of first components (4) consisting of substantially flat preformed unit portions of fresh pasta (5) and a corresponding number of second components (6) consisting of pre-dosed pralines of filling (7) obtained as claimed in one or more of claims 1 to 10.

12. Kit as claimed in claim 11, **characterized in that** said substantially flat pre-formed unit portions of fresh pasta (5) and said pre-dosed pralines of filling (7) are collected in a container (10) having corresponding separate compartments (10', 10").

13. A method of use of a food kit (1) for on-demand preparation of fresh filled pasta (P) such as tortelli, ravioli, panzerotti and the like, obtained as claimed in one or more of claims 1 to 10 , by taking first components (4) consisting of flat unit portions of pasta (5) of a predetermined shape, and second components (6) consisting of pre-dosed pralines of filling (7) from a container (10) of the kit (1), composing by the user said first (4) and said second (6) components to form fresh filled pasta (P) of a desired shape, while avoiding exchange of water, salts and other ingredients between said components (4, 6) under much the same conditions as preparation of homemade pasta.

## Patentansprüche

1. Verfahren zur Herstellung eines Nahrungsmittelkits (1), das zur auf Anforderung Zubereitung frisch gefüllter Teigwaren (P), wie Tortelli, Ravioli, Panzerotti und dergleichen, mit den sehr gleichen Eigenschaften wie hausgemachte frische Teigwaren bestimmt ist, wobei das Verfahren das Herstellen erster Komponenten (4) umfasst, die aus Einheitsportionen (5) aus einfachen oder doppelten Blättern frischer Teigwaren mit einer vorbestimmten flachen Form, und aus Kühlen, Vakuumverpacken, Kalthochdruckpasteurisieren und Kühlen der pasteurisierten Einheitsportionen (5) bestehet, um ihre Struktur und physikalisch-rheologische Eigenschaften unverändert beizubehalten, während eine Vorgelatinierung von Stärken vermieden wird; und Herstellen zweiter Komponenten (6), die aus vordosierten Füllungspralinen (7) bestehen, die geeignet geformt sind und später einer Pasteurisierung und/oder möglicherweise einem Einfrierung unterzogen werden, wobei die ersten Komponenten (4) und die zweiten Komponenten (6) in einem Behälter (10) zur frischen oder gefrorenen Lagerung verpackt und gesammelt werden und wobei die ersten und zweiten Komponenten so wie sie sind oder nach dem Auftauen miteinander verbunden zu werden bereit sind, zur auf Anforderung Zubereitung vor dem Kochen von Formaten frisch gefüllter Teigwaren (P), wodurch der Austausch von Wasser, Salzen und anderen Zutaten zwischen den Komponenten (4, 6) vermieden wird.

2. Verfahren nach Anspruch 1, **dadurch gekennzeichnet, dass** die vorgeformten Einheitsportionen frischer Teigwaren (5) hergestellt werden, indem ein Einheitsblatt in mehrere Portionen vorgeschnitten wird, wobei die Einheitsportionen (5) durch endgültige Trennung entlang vorgeschnittener Linien erhalten werden.

3. Verfahren nach Anspruch 1, **dadurch gekennzeichnet, dass** die vorgeformten Einheitsportionen (5) oder mehrere vorgeschnittene Portionen mit den folgenden Schritten erhalten werden:
a) Herstellung eines Teigs aus Mehl, Grieß, Wasser und Eiern;
b) unidirektionales und/oder multidirektionales Laminieren des Teigs, um eine kontinuierliche Bahn mit vorbestimmter Dicke (s) zu erhalten;
c) Schneiden oder Vorschneiden des Endlosblatts in im Wesentlichen flache Einheitsportionen (5) oder mehrere Portionen, deren Form und Größe denen eines einzelnen Stücks Tortelli, Ravioli, Panzerotti oder dergleichen entsprechen.

5. Verfahren nach Anspruch 1, **dadurch gekennzeichnet, dass** die Einheitsportionen (5) oder Mehrfachportionen frischer Teigwaren den folgenden Behandlungen unterzogen werden:
d) schnelles Abkühlen auf eine erste Temperatur (T₁), die angepasst ist, um jegliche Fermentation zu vermeiden;
e) Vakuum- und unter kontrollierter Atmosphäre Verpacken der einzelnen Einheitsportionen (5) oder mehrerer Portionen bei einer zweiten Temperatur (T₂) niedriger oder gleich der ersten Temperatur (T₁);
f) Anwenden einer kalten Hochdruckpasteurisierung auf die vakuumverpackten Einheitsportionen (5) oder mehrere Portionen bei einer dritten Temperatur (T₃), die angepasst ist, um eine Vorgelatinierung der darin enthaltenen Stärke zu vermeiden, so dass die flache Form der Einheitsportionen (5) nicht verändert wird und die rheologischen und organoleptischen Eigenschaften des Grundteigs unberührt bleiben;
g) Kühlen und Lagern der pasteurisierten Einheitsportionen (5) bei einer vierten Temperatur (T₄), um erste Komponenten (4) des Lebensmittelsets (1) in einem frischen oder gefrorenen Zustand zu erhalten.

6. Verfahren nach Anspruch 1, wobei die Pralinen (7) mit den folgenden Schritten erhalten werden:
h) Zubereiten einer Füllung aus geeigneten Zutaten nach einem vorgegebenen Rezept;
i) Dosieren der Füllung in einzelne Pralinen (7), deren Gewicht und Form denen jedes Stücks Ravioli, Tortelli, Panzerotti oder dergleichen entsprechen;
j) Pasteurisieren der einzelnen Pralinen (7) bei Umgebungsdruck;
k) Verpacken der einzelnen Pralinen unter Schutzatmosphäre in separate Verpackungen (9);
I) Abkühlen und Kühlen der einzelnen Pralinen (7) auf eine fünfte Temperatur (T₅), um zweite Komponenten (4) des Lebensmittel-Kits (1) in einem frischen oder gefrorenen Zustand zu erhalten.

7. Verfahren nach Anspruch 5, **dadurch gekennzeichnet, dass** der Schritt des f) Anwendens einer kalten Hochdruckpasteurisierung (HPP) auf die Einheitsportionen von Teigwaren (5) bei einem Druck (P_{H}) im Bereich von 5000 bar bis 6000 bar für eine Zeit (t) im Bereich von 2 min bis 6 min durchgeführt wird.

8. Verfahren nach Anspruch 3, **dadurch gekennzeichnet, dass** die dritte Temperatur (T₃) weniger als 25°C beträgt.

9. Verfahren nach Anspruch 3, **dadurch gekennzeichnet, dass** die vorbestimmte Dicke (s) des Blattes im Bereich von 0,3 mm bis 1,5 mm liegt.

10. Verfahren nach Anspruch 3, **dadurch gekennzeichnet, dass** die erste Temperatur (T₁) weniger als 8-10°C beträgt und die zweite Temperatur (T₂) im Bereich von -5°C bis 10°C liegt.

11. Nahrungsmittelkit (1) zur auf Anforderung Zubereitung von frisch gefüllten Teigwaren (P), wie Tortelli, Ravioli, Panzerotti und dergleichen, umfassend eine gegebene Anzahl von ersten Komponenten (4), die aus im Wesentlichen flachen, vorgeformten Einheitsportionen von frischen Teigwaren (5) bestehen, und eine entsprechende Anzahl von zweiten Komponenten (6), die aus vordosierten Füllungspralinen (7) bestehen, erhalten nach einem oder mehreren der Ansprüche 1 bis 10.

12. Kit nach Anspruch 11, **dadurch gekennzeichnet, dass** die im Wesentlichen 1s flachen, vorgeformten Einheitsportionen frischer Teigwaren (5) und die vordosierten Füllungspralinen (7) in einem Behälter (10) gesammelt werden, der entsprechende getrennte Fächer (10', 10") aufweist.

13. Verfahren zur Verwendung eines Nahrungsmittelkits (1) zur auf Anforderung Zubereitung von frisch gefüllten Teigwaren (P) wie Tortelli, Ravioli, Panzerotti und dgl., wobei das Kit (1) nach einem oder mehreren der Ansprüche 1 bis 10 erhalten ist, wobei erste Komponenten (4) bestehend aus flachen Einheitsportionen von Teigwaren (5) einer vorbestimmten Form und zweite Komponenten (6) bestehend aus vordosierten Pralinenfüllungen (7) aus einem Behälter (10) des Kits (1) genommen werden, die ersten (4) und die zweiten (6) Komponente durch den Benutzer zusammengestellt werden, um frisch gefüllte Teigwaren (P) einer gewünschten Form zu bilden, während ein Austausch von Wasser, Salzen und anderen Zutaten zwischen den Komponenten (4, 6) vermieden wird unter fast den gleichen Bedingungen wie die Zubereitung von hausgemachter Pasta.

## Revendications

1. Procédé de fabrication d'un kit alimentaire (1) destiné à la préparation à la demande de pâtes fraîches fourrées (P), telles que tortelli, raviolis, panzerotti et similaires avec exactement les mêmes propriétés que les pâtes fraîches maison, le procédé comprenant la fabrication de premiers composants (4) consistant en portions unitaires (5) de feuilles simples ou doubles de pâtes fraîches ayant une forme plate prédéterminée, refroidissement, emballage sous vide, pasteurisation haute pression à froid et réfrigération desdites portions unitaires pasteurisées (5), pour maintenir leur structure et caractéristiques physico-rhéologiques inchangées, tout en évitant la pré-gélatinisation des amidons, et en fabriquant des seconds composants (6) constitués de pralines pré-dosées de fourrage (7), qui sont appropriatement façonnées et subissent ensuite une pasteurisation et/ou éventuellement une congélation, lesdits premiers composants (4) et lesdits deuxièmes composants (6) étant emballés et collectés dans un conteneur (10) pour un stockage frais ou congelé, et étant prêts à être assemblés tels quels ou après décongélation, pour préparer à la demande des formats de pâtes fraîches fourrées (P) avant cuisson, évitant ainsi les échanges d'eau, de sels et d'autres ingrédients entre lesdits composants (4, 6).

2. Procédé selon la revendication 1, **caractérisé en ce que** lesdites portions unitaires préformées de pâtes fraîches (5) sont réalisées en prédécoupant une feuille unitaire en plusieurs portions, lesdites portions unitaires (5) étant obtenues par séparation finale le long de lignes de prédécoupage.

3. Procédé selon la revendication 1, **caractérisé en ce que** lesdites portions unitaires préformées (5) ou multiples portions prédécoupées sont obtenues avec les étapes consistant à:
a) faire une pâte à partir de farine, de semoule, d'eau et d'œufs;
b) laminer unidirectionnellement et/ou multidirectionnellement la pâte pour obtenir une feuille continue d'épaisseur (s) prédéterminée;
c) découper ou prédécouper la feuille continue en portions unitaires sensiblement plates (5) ou en plusieurs portions dont la forme et la taille correspondent à celles d'un seul morceau de tortelli, ravioli, panzerotti ou similaire.

5. Procédé selon la revendication 1, **caractérisé en ce que** lesdites portions unitaires (5) ou portions multiples de pâtes fraîches subissent les traitements suivants :
d) refroidissement rapide à une première température (T₁) adaptée pour éviter toute fermentation;
e) emballage sous vide et sous atmosphère contrôlée des portions unitaires individuelles (5) ou des portions multiples à une seconde température (T₂) inférieure ou égale à ladite première température (T₁);
f) application d'une pasteurisation froide à haute pression aux portions unitaires (5) ou aux portions multiples emballées sous vide à une troisième température (T₃) qui est adaptée pour éviter la prégélatinisation de l'amidon qu'elles contiennent, de sorte que la forme plate desdites portions unitaires (5) ne sera pas altérée et les propriétés rhéologiques et organoleptiques de la pâte de base ne seront pas affectées;
g) refroidir et stocker les portions unitaires pasteurisées (5) à une quatrième température (T₄) pour obtenir des premiers composants (4) du kit alimentaire (1) à l'état frais ou congelé.

6. Procédé selon la revendication 1, dans lequel lesdites pralines (7) sont obtenues avec les étapes de :
h) préparer une garniture à partir d'ingrédients appropriés selon une recette prédéterminée;
i) doser la garniture en pralines individuelles (7) dont le poids et la forme correspondent à ceux de chaque morceau de ravioli, tortelli, panzerotti ou similaire ;
j) pasteuriser les pralines individuelles (7) à pression ambiante ;
k) emballer les pralines individuelles sous atmosphère protectrice dans des emballages séparés (9);
l) refroidir et réfrigérer les pralines individuelles (7) à une cinquième température (T₅) pour obtenir des seconds composants (4) du kit alimentaire (1) à l'état frais ou congelé.

7. Procédé selon la revendication 5, **caractérisé en ce que** ladite étape de f) application d'une Pasteurisation à Haute Pression (HPP) à froid auxdites portions unitaires de pâtes (5) est effectuée à une pression (P_{H}) allant de 5000 bars à 6000 bars, pour un temps (t) allant de 2min à 6min.

8. Procédé selon la revendication 3, **caractérisé en ce que** ladite troisième température (T₃) est inférieure à 25°C.

9. Procédé selon la revendication 3, **caractérisé en ce que** l'épaisseur (s) prédéterminée de la feuille est comprise entre 0,3 mm et 1,5 mm.

10. Procédé selon la revendication 3, **caractérisé en ce que** ladite première température (T₁) est inférieure à 8-10°C, ladite seconde température (T₂) allant de -5°C à 10°C.

11. Kit alimentaire (1) pour la préparation à la demande de pâtes fraîches fourrées (P) telles que tortelli, raviolis, panzerotti et similaires, comprenant un nombre donné de premiers composants (4) constitués de portions unitaires préformées sensiblement plates de pâtes fraîches (5) et un nombre correspondant de deuxièmes composants (6) constitués de pralines prédosées de garniture (7) obtenues selon une ou plusieurs des revendications 1 à 10.

12. Kit selon la revendication 11, **caractérisé en ce que** lesdites portions unitaires préformées sensiblement plates de pâtes fraîches (5) et lesdites pralines prédosées de garniture (7) sont collectées dans un récipient (10) ayant des compartiments séparés correspondants (10', 10").

13. Procédé d'utilisation d'un kit alimentaire (1) pour la préparation à la demande de pâtes fraîches fourrées (P) telles que tortelli, ravioli, panzerotti et similaire, le kit obtenu selon une ou plusieurs des revendications 1 à 10, selon lequel des premiers composants (4) constitués en des portions unitaires plates de pâtes (5) de forme prédéterminée, et des deuxièmes composants (6) constitués de pralines de garniture pré-dosées (7) provenant d'un récipient (10) du kit (1) sont pris, composant lesdits premier (4) et ledit deuxième (6) composants sont composés par l'utilisateur pour former des pâtes fraîches fourrées (P) d'une forme souhaitée, tout en évitant l'échange d'eau, de sels et d'autres ingrédients entre lesdits composants (4, 6) dans des conditions sensiblement identiques à celles de la préparation de pâtes maison.
